(19) **Europäisches Patentamt**
**European Patent Office**
**Office européen des brevets**

(11) **EP 3 992 882 A1**

(12) **EUROPEAN PATENT APPLICATION**

(43) Date of publication:
**04.05.2022  Bulletin 2022/18**

(21) Application number: **21205859.8**

(22) Date of filing: **02.11.2021**

(51) International Patent Classification (IPC):
**G06Q 20/02** (2012.01)  **G06Q 20/30** (2012.01)
**G06Q 10/06** (2012.01)  **G06Q 20/40** (2012.01)
**G06Q 40/08** (2012.01)

(52) Cooperative Patent Classification (CPC):
**G06Q 20/02; G06Q 10/0635; G06Q 20/308;
G06Q 20/405; G06Q 40/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2020  IT 202000026044**

(71) Applicant: **Vittoria Hub srl
20149 Milano (MI) (IT)**

(72) Inventor: **Baldinotti, Gian Franco
20149 Milano (MI) (IT)**

(74) Representative: **Bottino, Giovanni
ARBO Srl
Via Colombo, 11/29
16121 Genova (IT)**

(54) **SYSTEM AND METHOD FOR MANAGING INSURANCE CONTRACTS**

(57)    Procedure for managing insurance contracts between at least one policyholder and at least one insurance company, comprising the following steps
a) processing a stochastic actuarial model adapted to calculate risk values based on accidental deviations typical of the behaviour of the individual customer and systematic deviations typical of phenomena with significant variance;
b) generating a smart contract developed on publicly accessible blockchain to regulate the payment of a premium, which smart contract implements said stochastic actuarial model;
c) receiving by means of a distributed ledger of public data accessibility by an oracle constituting a third party and comprising an IoT apparatus and/or an information provision body;
e) regulating and executing said smart contract on the basis of said data received from the oracle.

Fig. 1

**Description**

The object of the present invention is a procedure for managing insurance contracts between at least one policyholder and at least one insurance company.

The actuarial models which regulate insurance contracts can be classified into three macro-classes: static models, dynamic models and stochastic models.

Static models are defined as such in that they are based on the use of probabilities (of occurrences) taken from "period" observations and the model is therefore based on static hypotheses, which do not consider any "trends" (improvement, worsening?) of event occurrence frequencies. The model is deterministic because the probabilities are only used to calculate expected values. The business risk is "summarised" in terms of an implicit security load, implemented by calculating the expected actual value with a prudential assessment (favourable to the insurer).

Therefore, any measurement of business risk quantification (for example, the variance of the random present value resulting from the behaviour of the insured) is absent from the actuarial calculation.

In summary, the incompatibility is highlighted:

- in a static model with events which have a dynamic trend evolution;
- in a deterministic model with the uncertainty related to the variance of behaviours;

Dynamic models tend to overcome the limitations of static models. Ignoring the existence of a trend entails the risk of underestimating or overestimating the cost of the relative performance.

The relevant demographic trends in the twentieth century have already led to the definition of satisfactory extrapolation methods for life insurance applications (therefore, also suitable for social security) which are based on the construction of projected mortality tables, i.e., determined by projecting, through a suitable model, the mortality trend observed in a previous period of time.

Similar models have been constructed for example for property/casualty risks.

A stochastic model, capable of appropriately quantifying the risk in a portfolio, differs from a deterministic one because it can consider (and therefore evaluate) the risk originating from:

- accidental deviations (which depend, for example, on the individual's behaviour);
- systematic deviations (typical of phenomena which have a significant variance)

Since the end of the eighteenth century, numerous scientific contributions have strengthened the actuarial model considering the first of the aforesaid risk components, especially related to life-risk insurance benefits.

However, these contributions have not had significant applications, in particular due to the fact that the risk deriving from accidental deviations decreases, in relative terms, as the size of the insurance portfolio increases ("pooling risk") and can therefore be adequately addressed by the insurer with an increase in the size of the portfolio. This is also possible thanks to the use of reinsurance, through which insurance companies share the risk with other companies which instead of having the insured customer as their final customer, have the insurance company as their customer. Thereby large risks, such as catastrophic risks, are spread over a large part of the insurance market.

Unfortunately, reduced pooling risks and the absence of reinsurers are precisely the main technical obstacles to new types of coverage on risks characterised by accidental and systematic deviations. In these cases, in order to take risks insurance and reinsurance companies protect themselves by raising premiums, applying high uncertainty coefficients, to the detriment of the final consumer.

With regard to the risk deriving from systematic deviations, consider, for example, the variance of apical atmospheric phenomena due to climate change, where in the face of a small variation relative to the number of average rainy days in the period, in a slight decrease, there was a practically infinite variance in the average number of events of extreme phenomena, both in quantity and in intensity.

It is quite clear that the possibility of developing stochastic actuarial models, which take into account both accidental and systematic deviations, ensures the insurance company a better portfolio quality, a lower need to resort to reinsurance and therefore greater profitability deriving from the control of business risk.

Below are some use cases which could benefit from stochastic actuarial models.

Theft and robbery: it is well known that the frequency of robbery in private homes is significantly lower than the frequency of theft in apartments. The difference between the two modules is substantiated in violence or threat, which is possible only if someone is present in the house subject to theft. It is intuitive (and it is also common experience) that a house which remains abandoned is more at risk of theft than a house which instead always has someone present. However, the traditional insurance coverage against theft does not take this element into account.

Atmospheric events: 2019 was a tragic year due to the risks of hail, atmospheric events and catastrophic water damage. The year was characterised by a great amount of rainfall well beyond the capacity of the first layers of the standard agreements, with a negative effect on the technical indices and accounts of insurance and reinsurance companies.

Below is an exemplary and non-exhaustive list of Property, Casualty and Liability risks which would benefit from stochastic actuarial models.

If the risk depends on user behaviours or events with significant variances in historical series, it is necessary to construct stochastic actuarial models which allow to modulate premiums based on prediction of event occurrences or detection of behaviours which vary the likelihood of risk.

The further complication depends on the fact that the rates must be modulated in line with such occurrences, and therefore cannot be predetermined and fixed.

Furthermore, the mechanisms for regulating and executing insurance contracts thus structured, once stipulated, must be certain, so that the lawfulness of the benefit itself is not opposable by anyone.

The enabling technological solution could be a contractual module based on a technology which allows to ensure these automatic adjustment and execution mechanisms, identified in the smart contract instrument.

A smart contract is a computer protocol which facilitates, verifies or enforces the negotiation, payment or performance of a contract.

In particular, smart contracts envisage the existence of an oracle to resolve details which cannot be precisely known at the time of drafting the contract. The oracles are third-party agents which come between the (virtual) smart contracts and the real world, in order to pass information to the smart contract system as soon as a certain condition occurs.

The concept of smart contract was introduced by Nick Szabo in 1994, who defined it as a computerised transaction protocol which executes the terms of a contract. The contractual clauses are encoded and incorporated into the underlying computer system (hardware and software).

This technological solution eliminates the need for a third party to ensure the execution of the contract.

The logical scheme of a smart contract is that an account holder (external to the system, for example the company, the policyholder, or an oracle) generates a transaction (of valued data) towards the smart contract, which contains the functions which allow the execution of the contract forecasts, which generate events (status changes), or messages (internal to the systems) towards other smart contracts.

The smart contract offers a number of benefits:

- Real-time updates
- Precision
- Reduced risk of execution
- Less intermediaries
- Lower cost

The rate modulation structure, derived from the stochastic actuarial model, is therefore enabled by such technologies capable of verifying a condition, an event, a state or the variation of a state, or provide information on the prediction of an event.

Therefore, smart contracts are computer protocols which facilitate, verify, or enforce the negotiation or execution of a contract and which are executed on the validator nodes of a blockchain.

A blockchain is a shared, unchangeable data structure. It is defined as a digital register whose entries are grouped in blocks, concatenated in chronological order, and whose integrity is ensured by the use of encryption.

By virtue of such features, blockchains are therefore considered an alternative in terms of security, reliability, transparency and costs to centrally managed databases and registers.

A blockchain is an open and distributed digital register which can store data records (usually referred to as "transactions") in a secure, verifiable and permanent manner.

Once written, the data in a block cannot be retroactively altered without modifying all the blocks subsequent thereto and this, due to the nature of the protocol and the validation scheme, would require the consent of the majority of the network.

A blockchain can therefore be represented as a continuously growing list of blocks connected to each other and made secure through the use of encryption.

The security and inviolability of data on blockchains is ensured by dual-key, public key and private key encryption.

Furthermore, each node (miner) in the decentralised system has a copy of the blockchain: the integrity of the data is ensured by the massive replication of the database.

There is no centralised official copy and no user is more credible than others, they are all at the same level of credentials.

The miner nodes validate the new transactions and add them to the block they are building after verifying the entire blockchain. Once the block is complete, they transmit it to the other nodes in the network.

By virtue of these features, the data saved on a blockchain is considered incorruptible.

One of the most relevant objections raised to the use of smart contracts is that, operating on intrinsically public systems such as blockchains, the data security ensured by encryption alone is limited. In fact, it is only a matter of computing power, made increasingly accessible by technological progress, to be able to break a chain.

The GDPR has made clear regarding the subject of processing personal data that all personal data processing must take place in compliance with the principles set out in Article 5 of Regulation (EU) 2016/679, namely:

- lawfulness, fairness and transparency of the processing, towards the data subject;
- limitation of the purpose of the processing, including the obligation to ensure that any subsequent processing is compatible with the purposes of data collection;
- minimisation of data: i.e., the data must be adequate, relevant and limited to what is necessary with respect to the purposes of the processing;
- data accuracy and updating, including the timely erasure of data which are inaccurate with respect to the purposes of the processing;
- limitation of storage: i.e., it is necessary to provide for the storage of data for a period not exceeding that necessary with respect to the purposes for which the processing was carried out;
- integrity and confidentiality: the adequate security of the personal data being processed must be ensured.

The Regulation requires the Data Controller to comply with all these principles and to be "able to demonstrate it", in particular, "the Data Controller implements appropriate technical and organisational measures to ensure, and be able to demonstrate, that the processing is carried out in accordance with the present Regulation".

Furthermore, the legislator clarifies that the processing of personal data by undertakings is permitted only as long as an unequivocal, free, specific, informed, verifiable and revocable consent has been provided for this processing.

It is clear that the introduction of the smart contract poses a significant privacy problem in terms of compliance with the provisions of the law.

Beyond this aspect, it is necessary to consider the repercussions on the distribution, a possible insured party could be strongly inhibited from using smart contracts which make use of IOT, if they have doubts about the processing of personal data, sent to the smart contract by the IOT EOA.

The term "privacy by design" refers to the principle of incorporating privacy starting from the design of a business process with the relative supporting computer applications.

This implies the implementation of certain mechanisms which ensure the exclusive processing of personal data necessary for that specific design.

It represents the future of privacy, as it adds a new key element to personal data protection legislation.

Privacy by design seeks to ensure the highest degree of privacy by ensuring that personal data is automatically protected in a given IT system or business practice, and if an individual does nothing, their privacy remains intact. No action is required from the individual to protect their privacy - because it is integrated into the system, by default.

This principle, which could be called Privacy by default, is articulated as follows:

- Purpose specification: the purposes for which personal information is collected, used, stored and disclosed must be communicated to the data subject before the data is collected. The specified purposes should be clear, limited and relevant to the circumstances.
- Limitation of collection: the collection of personal information must be fair, lawful and limited to what is necessary for the specified purposes.
- Minimisation of data: the collection of personally identifiable information must be strictly reduced to a minimum. The design of programs, information and communication technologies and systems should start with unidentifiable interactions and transactions, by default. Where possible, the identifiability, observability and connectability of personal information should be minimised.

- Restriction on use, retention and disclosure: the use, retention and disclosure of personal data information is limited to the relevant purposes identified by the individual, for which they have consented, unless otherwise required by law. Personal information should only be retained for as long as is necessary to fulfil the stated purposes, and then destroyed in a secure manner. Where the need for or use of personal information is unclear, there must be a presumption of confidentiality and the precautionary principle applies: the default settings must be the most protective for privacy.

The following critical elements regarding the compatibility between blockchain and GDPR must be highlighted.

The processing of personal data requires the presence of an identified data controller, who is responsible for any violations; in a public blockchain the data are decentralised and contained in each miner.

Since a data controller cannot be identified, it follows that personal data cannot be processed on public blockchains; there is vast literature, both technical and legal, which indicates how the hashing algorithms used in this class of computer technologies to encrypt data do not allow them to be considered comparable to anonymous data, in fact, if such algorithms were violated, the data stored on the public ledger would be exposed.

Furthermore, the very features of the blockchain itself (shared and immutable data structure) are explicitly in contrast with the rules of right of rectification, right of cancellation and storage time limitation thereof.

A smart contract, natively supported by blockchains, is characterised by some distinctive features: self-execution, irrevocability, constraint and, by virtue of blockchain technology, with a value comparable to a contract digitally signed and registered with a time stamp.

In summary, smart contracts are software which, by the freely expressed will of the parties, ensure that upon the occurrence of certain conditions, functions are automatically performed without human intervention.

The contract interpretation and execution are therefore ensured by the distributed and delocalised hardware and software components forming the blockchain, it is therefore impossible for a human being to revoke a contract, or oppose the execution thereof once it has been stipulated. The logic is that IFTTT (IF THIS THEN THAT) is well known today by virtue of the advent of home assistant technologies.

It is also possible to imagine an evolution of insurance services towards subscription modules, i.e., insurance modules in which the cost of coverage linked to the insurance benefit depends on whether the insurance is in an activated state and the payment depends on the user's behaviour or on the occurrence of a certain event.

Outside the insurance world, the subscription-type contractual module has become a very popular way to buy online. Subscriptions to streaming media (Netflix, Spotify) were the first, but consumers today are also turning to this form of purchase for consumer goods. Research by McKinsey shows that in 2018, 15% of online shoppers subscribed to an e-commerce service. Most e-commerce subscribers also have streaming-media subscriptions.

The term subscription service refers to a service whose usability depends on the detection of a status: Active or Inactive.

In addition to giving access to the service, the detection of the change in status from "inactive" to "active" can also trigger the accounting methods of any economic fees, this is for example the mechanism used for cloud services (IaaS, SaaS, etc...), where access is provided to resources when the subscription is active and the user is billed based on the resources actually used.

In the case of insurance subscription contracts, the accounting (the calculation of the consideration for the insurance benefit) is interrupted when the insurance coverage is deactivated because the contract expires.

Instant-type insurance has two critical points:

  1. they always operate in anti-selection
  2. they have significant acquisition costs

In particular, the first point (anti-selection) prevents an actuarial model from being produced.

We shall clarify with some examples: an instant insurance model applied to the case of theft illustrated in the introduction would mean that the customer activates, on demand, the coverage when he believes he is at risk, leaving the evaluation of the convenience or not to insure himself to his arbitrage.

On the contrary, the subscription contractual module applied to property, casualty and liability insurance differs substantially from instant insurance because it envisages the activation of the policy for a predetermined duration (for example the year) entrusting an IOT device, not controllable by the customer (the oracle), with the task of detecting the presence or absence from the home, thus regulating the payment of the insurance premium.

The case of atmospheric events is similar; suppose the customer is to be offered the possibility of instant coverage, it would again be the individual to decide whether to activate the coverage, based on the weather forecasts, it is likely that he will decide to activate the coverage only in the case of particularly unfavourable forecasts.

In the subscription model, on the other hand, when the contract is signed, the premium would be paid only in the event of forecast rain, a forecast to be provided by an information provider independent of the customer and the company; the premium could also be harmonised according to the intensity of the expected precipitation.

For the second point (acquisition cost), considering a travel insurance, which is usually sold according to the on demand or instant insurance model (typically upon purchasing the trip), it is clear that the contract will have to be "resold" every time the customer takes a trip.

With the subscription model, the customer is covered in case of travel for the duration of the contract (one year), but pays the premium only if he travels, each time he travels, for each day abroad and interrupts the calculation of the fee, automatically, upon returning home, in this case the third party information provider could be for example a telephone operator.

There are many cases to which these models can be applied: consider, for example, an athlete's IP policy which is charged every time athletic activities are carried out (for example, coverage for a cyclist's injuries, which regulates the premium if the bicycle is used, in this case the IOT device is on the bicycle), or a theft policy which is charged only if the policyholder is on the road, or a fire guarantee in which the premium varies if a person is or is not at home, a family RC guarantee in which the premium is calculated only when the family is not home.

Or consider still the case of atmospheric events, where historical series on the number of days of precipitation exist.

The correlation between the days of precipitation, the intensity of the atmospheric event and the frequencies of claims is detectable by the historical series.

$I_{(\chi)}$ is a class of precipitation intensity

$A(I_\chi)=\{i_1, \dots ,i_n\}$ is the historical series of days in a given precipitation class

$B(\chi)=\{f_1,\dots, f_n\}$ is the historical series of claim frequencies in the same days

The following formula expresses the correlation between the series of days per precipitation class and the claim frequencies

$$\rho = \frac{COV(A(I\chi),B(\chi))}{\delta_A * \delta_B}$$

where

$COV(A(I_\chi),B(\chi))$ is the covariance of the two series $A(I_\chi)$ and $B(\chi)$ given by the formula

$$COV(A(I\chi),B(\chi)) = \frac{\sum_i^n (i_i - \mu_A)(f_i - \mu_B)}{n-1}$$

$\mu_A$ and $\mu_B$ are the sample means of the two data series

$\delta_A$ and $\delta_B$ are the sample standard deviations of $A(I_\chi)$ and $B(\chi)$

It can be observed that the value p starts from 0 for the series of days with the absence of disturbed conditions, and increases as the precipitation intensities increase.

It is therefore possible to define rates which allow to take into account the climatic conditions, which depend on the expected precipitation intensity, and on this basis require the customer to pay a fee proportional to the risk, based on the weather forecast and the relative intensity expected for the following period.

Similarly, it is possible to elaborate a correlation index between housing classes for hours of absence in the period, and frequency of accidents in the same period.

However, it is clear that such a model of assumptions applies as long as once the insurance contract has been stipulated, the policyholder is not allowed to decide whether or not to pay the premium when requested, in order to avoid falling back into the risk of anti-selection.

At the same time, there is currently an unmet need for the currently known systems and procedures to design a system which ensures the protection of privacy with an absolute degree of confidence, both on the part of the insurance company and on the part of the consumer, i.e., the policyholder.

The present invention overcomes the currently known limits of the systems and procedures with a procedure for managing insurance contracts comprising the following steps:

a) processing a stochastic actuarial model adapted to calculate risk values based on accidental deviations typical of the behaviour of the individual customer and systematic deviations typical of phenomena with significant variance;

b) generating a smart contract developed on publicly accessible blockchain to regulate the payment of a premium, which smart contract implements said stochastic actuarial model;

c) receiving by means of a distributed ledger of public data accessibility by an oracle constituting a third party and comprising an IoT apparatus and/or an information provision body;

e) regulating and executing said smart contract on the basis of said data received from the oracle.

Therefore, the founding elements of this procedure are:

- a stochastic actuarial model, which allows to process risk models which include accidental deviations (which depend, for example, on the behaviour of the individual) and systematic deviations (typical of phenomena which have a significant variance)

- a smart contract, developed on blockchain, which regulates the payment of the premium, so that it is self-executed, irrevocable and binding
- a third party, consisting of an IOT apparatus or an Information Provider, recognised and accepted by the parties, capable of predicting occurrences of events or detecting behaviours which vary the probability of risk.

In an exemplary embodiment, the procedure comprises the following further steps:

f) creating a policyholder account form on a non-publicly accessible server;
g) managing the payment defined by the smart contract on a non-publicly accessible money transfer form,

the personal and banking data of the policyholder being segregated in the account form and in the money transfer form and not exchanged with said blockchain and said distributed ledger.

In an embodiment, only identification codes and/or tokens are exchanged between the account module and the money transfer module with said blockchain and said distributed ledger.

In an embodiment example, said distributed ledger is of the IOTA type.

IOTA is a blockchain optimised for the Internet of Things (IoT). Unlike Bitcoin-type blockchains and the like, which are complex and heavy, designed for other uses, IOTA was created to be as light as possible, hence the name "IOTA" with emphasis on the "IoT" part.

It is estimated that the number of connected devices in the next decade will exceed 50 billion. However, there are many obstacles to overcome, the most important being those related to the safety and reliability of the micro-transaction. Connected IoT devices must be able to transact with each other easily and without compromising technology design with the need for additional and expensive hardware. IOTA was conceived for this reason, developed to respond to the scalability problems faced in the IoT, even if the underlying protocol is agnostic and can be applied in any other use case which uses micro-transactions.

In order to achieve these bold objectives, the design of IOTA has radically deviated from blockchains, still maintains the basic ideas of blockchains on distributed consensus, but to be able to scale to the size of the next Internet of Things ecosystem with tens of billions of devices connected to each other, it must be very light and efficient. This problem has been solved by IOTA's main innovation: the Tangle. The tangle is a direct acyclic graph where, unlike the traditional blockchain, in order to be entered correctly, each transaction must validate two previous, not yet validated ones. This effectively eliminates the difference between users and miners present with the blockchain, because the validation is not based on competition between nodes, but is carried out in a distributed and uniform manner by all network participants.

IOTA does not seek to replace the blockchain, on the contrary it performs an integrated task with the current blockchain ecosystem, acting as a channel for the oracles of smart contract platforms such as Ethereum, Rootstock and others.

In an embodiment example, the data received from said distributed ledger is formatted into triplicates of the subject, predicate, and object type.

In a further embodiment example, the money transfer module comprises a payment gateway or a PISP.

Payment Initiation Service Providers (PISPs) are systems which act as a channel between the payer and his online payment account, initiating the payment transaction on behalf of the user, in favour of a third-party beneficiary.

The present invention stems from the finding that a technological solution based on smart contract on blockchain would be particularly suitable to support subscription-type modules of insurance based on stochastic actuarial models. However, the need to protect the customer's privacy is evident and the blockchain class of solutions cannot be used for processing personal data.

The multilayer model described above arises from this dilemma, where the insurance contract and the related personal data are managed on a private layer, the billing is regulated on a smart contract, managed on a public layer, on a payment gateway or by PISP, then on a private layer, finally the money collection is managed.

The object of the present invention is further: a system for managing insurance contracts between at least one policyholder and at least one insurance company, comprising:

a smart contract management module on publicly accessible blockchain to regulate the payment of a premium,
a reception module using a distributed ledger of public data accessibility by an oracle constituting a third party and comprising an IoT apparatus and/or an information provision body,
said smart contract management module being configured to generate said smart contract and to regulate and execute said smart contract based on said data received from the oracle.

In an embodiment, the system comprises a policyholder account module on a non-public accessibility server and a non-publicly accessible money transfer module configured for the payment management defined by the smart contract, the policyholder account module and the money transfer module being configured to keep the policyholder's personal and bank data segregated and to communicate solely by means of identification codes and/or tokens with said smart contract management module and said data reception module from the oracle.

These and other features and advantages of the present invention will become clearer from the following description of some non-limiting exemplary embodiments illustrated in the attached drawings in which:

fig. 1 illustrates a diagram of the device object of the present invention;
fig. 2 illustrates a flow chart in the case of successful payment;
fig. 3 illustrates a flow chart in the case of a refused payment.

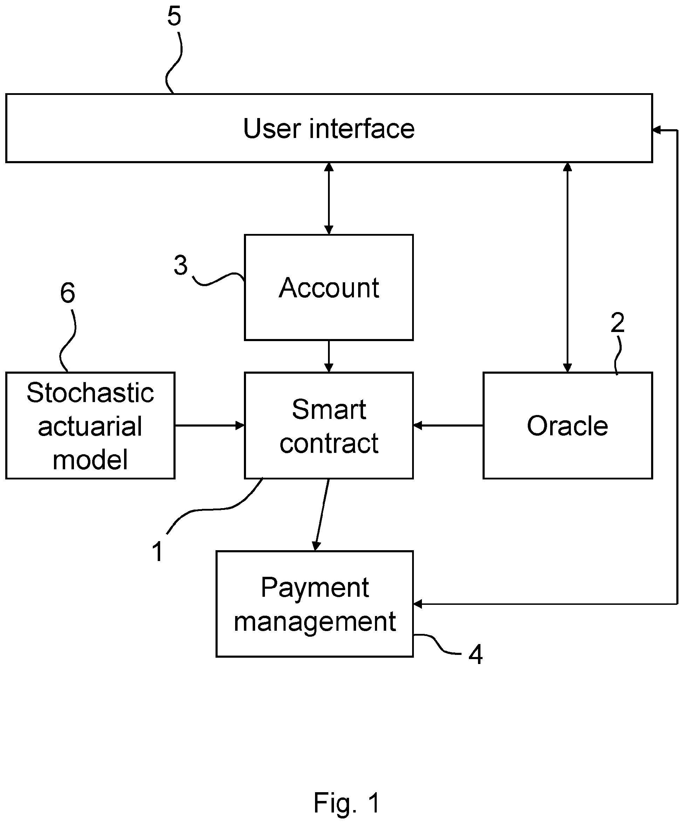

The system diagrammed in figure 1 comprises a smart contract management module 1 for regulating the payment of a premium and a data reception module 2 by an oracle.

The smart contract is based on a stochastic actuarial model 6 and is implemented on the validation nodes of a public accessibility blockchain.

The data received from the oracle 2 are used by the stochastic model 6 for the evaluation of accidental deviations and systematic deviations. The oracle constitutes a third party and comprises an IoT apparatus and/or an information provision body. The data reception module 2 receives data from the oracle by means of a distributed ledger of public accessibility.

Preferably, the distributed ledger is of the IOTA type.

The smart contract management module 1 is configured to generate the smart contract and regulate and execute the smart contract on the basis of the data received from the oracle 2.

The system comprises a policyholder account module 3 on a non-publicly accessible server and a non-publicly accessible money transfer module 4 configured to manage the payment defined by the smart contract.

The personal and bank data of the policyholder are not exchanged with the blockchain and the distributed ledger being the account module 3 of the policyholder and the money transfer module 4 configured to keep the personal and bank data of the policyholder segregated and to communicate only by means of identification codes and/or tokens with said smart contract management module 1 and said data reception module from the oracle 2, according to a multilayer model.

The money transfer module preferably consists of a payment initiation module 40, such as a payment gateway or a PISP, and a bank module 41.

The user interface 5, which can be an internet portal and/or an app on a mobile device such as a smartphone or tablet, allows the user to subscribe to their account, verify the data generated by the oracle and verify payments.

The system and the procedure object of the present invention ensure the privacy of the data by keeping them segregated in independent modules: the private and consensual underwriting and accounting systems for personal data; public IOTA for information related to events; the user's private interface (for example, the app on his mobile phone) for the detailed feedback data; the public smart contract for billing. Therefore, there is no personal data exchanged with blockchain or public ledger.

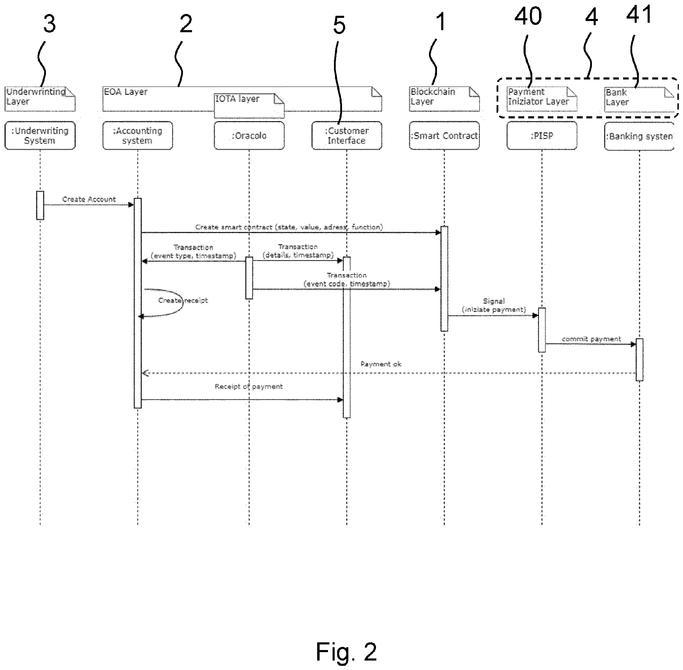

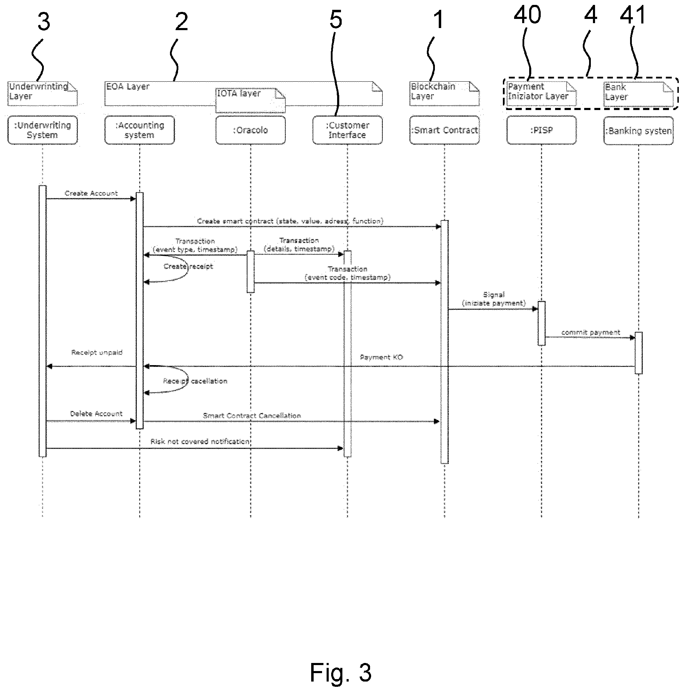

Figures 2 and 3 illustrate a flow chart of the procedure in the event of successful payment and declined payment, respectively.

When the insurance contract is finalised, an account is generated on the accounting system. When the account creation operation is successful, the smart contract is generated, which governs the billing operations.

The account will be fed with quittances generated following signals received by the oracle.

At the same time, the oracle will report the events or the forecast thereof to the customer's private interface.

The oracle sends a transaction to the smart contract which triggers a Payment initiation signal to the PISP/payment gateway.

If the payment is successful, the quittance is collected.

If the payment is unsuccessful, for example because the bank account has insufficient funds, the quittance is cancelled, the account is cancelled, the smart contract is terminated, the insurance contract is cancelled, and the customer is notified of the absence of coverage.

The data received from the distributed ledger is formatted in triplicates of the subject, predicate, and object type. For such data of events received by IoT, it is assumed to receive subject-predicate-object triplicates, in the "iotaId", "eventType", "eventValue" form. Organising data in triplicates is very similar to a relational database because it stores information in a database and retrieves it through a query language. In addition to queries, triplicates can be imported/exported using the Resource Description Framework (RDF), and the triplicate stores can be queried with efficient graph-based query languages (such as SPARQL).

To return to the examples used in the introduction, for the case of atmospheric events, the signals could for example be:

| Subject | predicate | object |
| --- | --- | --- |
| iotaId | alert | Red alert |
| iotaId | alert Type | Weather alert |
| iotaId | rainingForecast | 35 |
| iotaId | rainingForecastUnit | mmH20 |
| iotaId | windSpeed | 45 |
| iotaId | windSpeedUnit | knots |

While for the case of theft they could be:

| Subject | predicate | object |
| --- | --- | --- |
| iotaId | presence | out |
| iotaId | geofence | outside |

The advantage of using a triplicate system for the data from IoT ensures the following advantages:

1) simplicity
2) independence from HW
3) interoperability ensured by semantic references

It also offers considerable advantages in terms of data processing, in particular:

1) simplification of ETL processes (there are multiple market and opensource solutions for the transformation of triplicates in RDF)
2) ease and performance in data processing, through Sparql

These elements are not insignificantly effective when data collected through IOT devices must become a statistical basis for actuarial analysis and the creation of the stochastic model.

From the foregoing, it is therefore evident that the invention is not limited to the embodiments just described and illustrated by way of non-limiting examples, but may be varied and modified, as a whole and in individual details, especially constructively, according to the specific needs and conveniences of production and use, within the scope of the technical and functional equivalents, without abandoning the guiding principle set forth above and subsequently claimed.

## Claims

1. Procedure for managing insurance contracts between at least one policyholder and at least one insurance company **characterised in that**
   it comprises the following steps:

   a) processing a stochastic actuarial model adapted to calculate risk values based on accidental deviations typical of the behaviour of the individual customer and systematic deviations typical of phenomena with significant variance;
   b) generating a smart contract developed on publicly accessible blockchain to regulate the payment of a premium, which smart contract implements said stochastic actuarial model;
   c) receiving by means of a distributed ledger of public data accessibility by an oracle constituting a third party and comprising an IoT apparatus and/or an information provision body;
   e) regulating and executing said smart contract on the basis of said data received from the oracle.

2. Procedure according to claim 1, wherein the following further steps are envisaged:

f) creating a policyholder account form on a non-publicly accessible server;
g) managing the payment defined by the smart contract on a non-publicly accessible money transfer form,

the personal and banking data of the policyholder being segregated in the account form and in the money transfer form and not exchanged with said blockchain and said distributed ledger.

3. Procedure according to claim 2, wherein the account module and the money transfer module only exchange identification codes and/or tokens with said blockchain and said distributed ledger.

4. Procedure according to one or more of the preceding claims, wherein said distributed ledger is of the IOTA type.

5. Procedure according to claim 4, wherein the data received from said distributed ledger are formatted in triplicates of the subject, predicate, and object type.

6. Procedure according to one or more of the preceding claims, wherein the money transfer module comprises a payment gateway or a PISP.

7. Management system for insurance contracts between at least one policyholder and at least one insurance company,

**characterised in that**
it comprises
a smart contract management module (1) on publicly accessible blockchain to regulate the payment of a premium,
a reception module using a distributed ledger of public data accessibility by an oracle (2), which oracle (2) constitutes a third party and comprises an IoT apparatus and/or an information provision body,
said smart contract management module (1) being configured to generate said smart contract and to regulate and execute said smart contract based on said data received from the oracle (2).

8. System according to claim 7, which system comprises a policyholder account module (3) on a non-publicly accessible server and a non-publicly accessible money transfer module (4) configured to manage the payment defined by the smart contract,
the policyholder account module (3) and the money transfer module (4) being configured to keep the personal and bank data of the policyholder segregated and to communicate only by means of identification codes and/or tokens with said smart contract management module (1) and said data reception module from the oracle (2).

Fig. 1

Fig. 2

Fig. 3

Europäisches
Patentamt

European
Patent Office

Office européen
des brevets

# EUROPEAN SEARCH REPORT

Application Number

EP 21 20 5859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/117447 A1 (TRAN BAO [US] ET AL) 3 May 2018 (2018-05-03) * paragraphs [0122] - [0127], [0821] - [0869] * ----- | 1-8 | INV. G06Q20/02 G06Q20/30 G06Q10/06 G06Q20/40 |
| X | EP 3 452 929 A1 (INNOGY INNOVATION GMBH [DE]) 13 March 2019 (2019-03-13) * paragraphs [0020] - [0126] * ----- | 1-8 | G06Q40/08 |

TECHNICAL FIELDS
SEARCHED      (IPC)

G06Q

The present search report has been drawn up for all claims

| Place of search | Date of completion of the search | Examiner |
|---|---|---|
| Munich | 22 February 2022 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5859

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2022

| Patent document cited in search report | Publication date | Patent family member(s) | Publication date |
|---|---|---|---|
| US 2018117447 A1 | 03-05-2018 | NONE | |
| EP 3452929 A1 | 13-03-2019 | EP 3452929 A1 | 13-03-2019 |
| | | IL 262777 A | 30-05-2019 |
| | | WO 2017190795 A1 | 09-11-2017 |

For more details about this annex : see Official Journal of the European Patent Office, No. 12/82